# EUROPEAN PATENT SPECIFICATION

(11) **EP 1 794 098 B1**
(45) Date of publication and mention of the grant of the patent: **21.09.2011**
(21) Application number: 04786231.3
(22) Date of filing: 25.08.2004
(51) Int. Cl.: C03C 17/32, C08J 7/04

(54) **COATING PRODUCT FOR MASKING SCUFFINGS ON GLASS OR PLASTIC SURFACES**
BESCHICHTUNGSPRODUKT ZUR MASKIERUNG VON VERSCHLEISSERSCHEINUNGEN AUF GLAS- ODER KUNSTSTOFFOBERFLÄCHEN
REVÊTEMENT DESTINÉ À MASQUER LES ÉRAFLURES SUR DES SURFACES DE VERRE OU DE PLASTIQUE

(43) Date of publication of application: 13.06.2007
(73) Proprietor: ECOLAB INC., St. Paul, MN 55102-1390 (US)
(72) Inventor: NAJMAN, Robert, 40591 Düsseldorf (DE); SCHNEIDER, Michael, 41515 Grevenbroich (DE)
(74) Representative: Polypatent
(86) International application number: PCT/EP2004/051893
(87) International publication number: WO 2006/021233

(56) References cited:
- DE-A1- 19 945 169
- PATENT ABSTRACTS OF JAPAN vol. 009, no. 059 (C-270), 15 March 1985 (1985-03-15) & JP 59 195556 A (DAINIPPON INK KAGAKU KOGYO KK), 6 November 1984 (1984-11-06)

## Description

The present invention refers to a method for masking scuffings on glass or plastic surfaces.

Glass or plastic products often are scratched on parts of their surfaces either during use or when recovered for reuse. This especially refers to hollow products used for multi-trip in the food industry, like glass or plastic containers, especially bottles, In case that sold hollow product are repeatedly reused scuffings may occur in particular in the shoulder area and often in form of rings. Mostly, they result from friction for example with each other, like during the filling process, or in the course of transportation or filling/refilling. Those scuffings are not desired from an aesthetical point of view since they may influence the customer's buying behavior. Moreover, abrasions can reduce the maximum number of refillings. Such abrasions are especially visible on dark products like green or brown glass or plastic bottles used in the beverage industry.

Various coating materials have been proposed heretofore to cover such an abrasion on a bottle. The coating material has to be water resistant since the bottles are often stored in a refrigerator which enables the formation of condensates on the bottle surface. Sometimes the bottles are even placed in a cooler filled with ice water, which increases the requirements referring to water resistance.

However, covering the abrasion is not the only point to be considered when looking for an appropriate coating material. Some coating materials show poor drying properties because of their hygroscopicity, and thus they become sticky and are liable to adhere dust which deteriorates the optical view of the coated surface. Since the coating process in most cases proceeds automatically, generally there is no time for extensive drying steps like with additional heating. Heating might as well influence the condition or keeping quality of the poured material which is to be avoided.

Additionally, it is important that the coating material either adheres strong enough that it is not removed during the washing process when preparing the bottle for refilling. In this case it is supposed to not be susceptible to scratches itself in use or when prepared for refilling since this would cause the same aesthetical disadvantages as the uncoated bottle does. Or the coating has to be completely removable during the washing process to avoid residues for adhering to the surface before recoating, which again is not desired from an aesthetical point of view. Moreover, from an economical point of view, the coating material is meant to not force up prices. Additionally, with regard to safety the coating material has to exhibit a toxicity which is appropriate for use in food industries since it can not always be excluded that traces of the coating material get inside the hollow product supposed to be coated and thus get into contact with the food or beverage.

Specifically adopted coatings enable scuffings to be prevented. As mentioned above there are several requirements which have to be fulfilled by those coatings: (1) they should show good masking properties, (2) they are supposed to dry very fast, (3) they preferably do not provide a sticky feeling, (4) they should be easily applied, (5) they either are supposed to remain on the bottle during its life time or have to be easily removed when the bottles are washed during the refilling process, (6) they are supposed to be resistant against moisture during use, (7) they have to fulfill the requirements referring to food safety.

Several coatings are known from the art which serve this purpose. Frequently, mixtures containing liquid paraffin or one or more waxes optionally in combination with further ingredients are used.

Several patent applications deal with the use of polysiloxane compounds which are either applied directly on the container surface or formed after a precursor is applied on the surface. Coatings containing such compounds are described for example in US 4,237,834, US 3,574,673 or US 4,228,054. However, the coatings disclosed therein require solvents or catalysts which are not desirable with respect to their toxicology or other properties like flammability. Moreover, such polysiloxane compounds decompose during the alkaline washing procedure into substances which reduce the foam stability, which is disadvantageous especially for breweries.

JP 59/111947 discloses a coating agent containing a liquid paraffin and/or carnauba wax and one or more fatty acid esters selected from sorbitan fatty acid esters, higher alcohol fatty acid esters, glycerol fatty acid esters, sucrose fatty acid esters, propylene glycol fatty acid esters and soybean phospholipid functioning as emulsifier, which coating agent fulfills the above requirements

JP 59/116152 describes a similar composition additionally containing morpoholine fatty acid salt.

However, the short chain liquid paraffins exhibit a poor water resistance and provide sticky coatings whereas the long chain waxes show reduced masking properties and lead to formation of foam in the washing process, which adheres to the surface of the container and disturbs the washing process. Moreover, when removing the coating from the surface of the container in the washing process before refilling, the paraffin may remain in the dishwasher, which may reduce its lifetime. Furthermore, to fulfill the safety requirements only paraffin compounds of high purity may be used i.e. aromatic compounds generally contained therein or in the mixture of paraffins obtained from the mineral oil processing have to be separated therefrom, which is cost intense.

EP 0 690 032 A1 discloses coating agents containing mono or dicarboxylic acids having in all at most 40 carbon atoms as film forming compound. However, those coatings may have a negative influence on the taste if they get into contact with the product to be filled.
DE 19945169 discloses coating compositions containing a polyalkylene glycol and a solvent used to mask sarffings on glass.

Accordingly, the object underlying the present invention is to provide a method for washing scuffings on glass or plastic surfaces which fulfills the above enumerated requirements and does not exhibit the disadvantages of the products according to the state of the art.

Unexpectedly, the problem is solved by the method of claim 1.

An appropriate polyethene compound which provides those properties may be exemplified by polyethylene glycol with n being 200 to 1000, preferably 300 to 800. A further advantage of those compounds is that they are stable to ambient temperatures which generally occur in the range of from -10 to 50 °C. This has the effect that the coating does not show deteriorated properties for example In the summer when there are higher temperatures.

The sugar polyol compound containing free hydroxy groups which is appropriate for the present use is glycerine.

In a further preferred embodiment the above described polyether compound is contained in the coating product in an amount of from 75 to 99,9 wt.%, more preferred 90 to 99 wt.% based on the coating product.

The remaining amount may be represented by one or more compounds selected from the group comprising surfactants, especially non-ionic surfactants, emulsifiers, preservatives, thickening agents, water and one or more other solvents which do not cause problems with regard to food and beverage safety.

The surfactants, and especially the non ionic surfactants which are most preferred, function as disperser of the coating forming compound and are selected from fatty alcohol alkoxylates. Therein as alkoxylates ethoxylates and propoxylates are particularly preferred. Other appropriate emulsifiers are chosen from sorbitane ethoxylate fatty acid esters, polyglycerin fatty acid esters, methyl glucoside fatty acid esters, methyl glucoside ethoxylate fatty acid esters, glycerin ethoxylate fatty acid esters and others known in the art or mixtures thereof may be contained in the coating product as well.

Fluorinated surfactants which provide excellent wetting properties are appropriate for the present purpose as well, yet, they are quite expensive. Ionic surfactants may also be used in the present invention although they are not preferred as they may show interactions with water which is optionally contained therein.

The surfactants are contained in an amount of from 0 to 20 wt.%, preferably 1 to 5 wt.% and more preferred 0,1 to 1 wt.% based on the coating product.

A further optional ingredient of the inventive coating product is represented by preservatives which are supposed to prevent contamination with microorganisms. Appropriate preservatives include those known in the art like formic acid, benzoic acid or benzoic acid esters or mixtures thereof. Formaldehyde containing compounds as well as chloride containing compounds should be avoided. The preservatives are contained in an amount of from 0 to 5 wt.%, preferably 1 to 2 wt.% and more preferred 0.05 to 0,5 wt.% based on the coating product.

Thickening agents suitable in the present intention are exemplified by polyacrylates or cellulose ethers. The thickening agents are contained in an amount of from 0 to 30 wt.%, preferably 5 to 20 wt.% and more preferred 1 to 5 wt.% based on the coating product.

The water content of the inventive coating product preferably ranges from 1 to 10 wt.% based on the coating product.

Other solvents which do not cause problems with regard to food and beverage safety can also be used to facilitate the appliance of the coating compound on the product surface. Such solvents are exemplified by monovalent alcohols like ethanol or propanol or other suitable solvents like acetone. The content of the one or more solvents in the coating product preferably ranges from 1 to 10 wt.% based on the coating product.

*.* It is also possible to use a mixture of water and one or more solvents in a total amount of from 1 to 10 wt.% based on the coating product.

The coating product may be applied for masking scuffings on a glass or plastic surface which has a flat or warped finish. A more or less flat glass surface is exemplified by a windscreen. The warped finish preferably is part of a hollow body, particularly used in multi trip and especially used in the food Industry.

Particularly preferred is the use of the inventive product for masking scuffings on hollow bodies like glass or plastic containers, especially bottles. In the food industry such containers and bottles generally contain non alcoholic beverages like mineral water, juices, all kinds of lemonades and also milk and milk products, alcoholic beverages like beer, wine or spirits or more viscous products like yogurt or something like that. Containers may as well be used for fruits, veg e-tables or other preserved food. The form of the container may be adapted to the purpose of use. Liquid products are generally filled in bottles whereas food or beverages with viscous, gel like or solid consistency are filled in mugs or tins. The scope of the invention is supposed to not be restricted to such containers but to comprise all kinds of glass or plastic containers known in the art which may show abrasions.

The coating product is preferably used for coating bottles made of green or brown glass since abrasions thereon are especially noticeable. Of course the coating product of the present invention Is also appropriate for use with white glass or glass of other colors.

Although the inventive coating product is preferably used for masking scuffings on glass it can as well be used for plastic containers or bottles, for example which are made of polycarbonate (PC), polyvinyl chloride (PVC), polyester (like polyethylene terephthalate, PET, or polyethylene naphthenate, PEN) and polyethylene (PE).

The above described Inventive coating compound may as well be used in form of a concentrate which is diluted directly before appliance with water or other solvents which do not cause problems with regard to food and beverage safety as mentioned above to obtain the coating product with the water/solvent concentrations as specified above. Accordingly, the concentrate is essentially free of water and/or solvents wherein essentially free means lower than 5 wt.%, preferably lower than 1 wt.% based on the concentrate .

Preferably, the coating concentrate is diluted with water and/or one or more solvents before appliance such that the use solution to be applied contains 1 to 10 wt.% water and/or solvent(s) based on the use solution. However, it is also possible to directly apply the concentrate onto the surface of the product to be coated.

The coating generally can be applied by methods known in the art like by soaking, dipping, spraying, brushing, wiping or sponging. An especially preferred application process Is described in PCT/EP 03112628. Generally, further drying is not required.

It is possible to apply the coating before filling the containers or bottles as well as afterwards. However, in case that the coating is applied before filling it preferably has to be provided that the coating product does not get into the container or bottle to prevent influences on the taste or the edibility of the filled product. Accordingly, It is preferred to apply the coating after the filling and closing of the container or bottle.

The coating product may be applied either before labeling the container or bottle or afterwards. From a practical point of view in most cases it will be advantageous that the coating step follows the labeling step which generally represents the final step in the filling process and provides for containers/bottles being transported one after the other in a row.

Although it is of course possible to provide the coating on the complete surface of the product to be coated with respect to an economical as well as to an ecological point of view it is preferred to apply the coating only partially in the area of the product which is especially susceptible to the formation of scuffings, like the shoulder portion of bottles. This may be easily achieved by choosing the appropriate method of appliance, for example spraying or brushing, and adapting the mechanical process accordingly.

It could also be observed that the coating material migrates to some extent before cooling and becoming solid to parts of the surface which are not coated.

The coating product or the coating concentrate as described above may be used for masking scuffings on glass or plastic surfaces, especially glass or plastic surfaces as defined before.

In the following the method and the coating product is further illustrated by the following examples.

### Examples

In the following the quantities refer to weight percent based on the use solution if not indicated otherwise. The water is demineralized water.

Six coating products of the following compositions were prepared:

| | | |
|---|---|---|
| 1) | polyethylene glycol 600: | 100% |
| 2) | polyethylene glycol 600: | 95% |
| | water: | 5% |
| 3) | polyethylene glycol 600: | 90% |
| | water: | 10% |
| 4) | polyethylene glycol 600: | 70% |
| | glycerine: | 20% |
| | water. | 10% |
| 5) | polyethylene glycol 600: | 95% |
| | water | 4% |
| | fatty alcohol alkoxylate | 1 % |
| 6) | polyethylene glycol 600: | 90% |
| | water | 9,5% |
| | fatty alcohol alkoxylate | 0,5% |

### 1. Scuff Masking Performance

A scuffed bottle was dipped into the corresponding application solution and afterwards drip dried. The used bottles are 0,51 Euro. The bottles were dipped into the application solution up to the upper scuffing mark. The bottles were evaluated with regard to masking performance, general bottle appearance (visible residues) and hapticity (slipperiness, stickiness).

With all tested compositions the scuffing marks were completely masked. The bottles had no sticky surface and no slippery touch. There were no visible residues on the bottle surfaces.

Finger prints have been observed on treated bottles as well as on untreated bottles. In comparison the finger prints on treated bottles were of the same intensity as on untreated bottles. The bottle treated with 100% polyethylene glycol 600 showed the best results with view to masking performance and haptic (stickiness, slipperiness). The amount of polyethylene glycol 600 applied on this bottle was about 15 mg, related to the surface about 0,05 mg/cm².

### 2. Product migration

One drop of the masking agents was applied to the scuffing ring of untreated bottles. The bottles were stored in upright position and at ambient temperature afterwards. Pictures were made after 15 min, 1 h, 2h and 48 h. The bottles were evaluated with regard to migration of masking agent to non-treated areas.

As a result there was a good migration of the masking agents over the scuff mark. However, it was observed, that the migration stopped, if the scuff mark was noncontinous.

### 3. General persistance

Scuffed bottles were treated by dipping them into the above coating products and drip dried. After the bottles were completely dried, they were placed in an oven for 14 days at 80°C and 40°C.

It was observed, that the masking agents were not temperature sensitive at the applied temperatures.

### 4. Persistance at all climates

Scuffed bottles were treated by dipping them into the above coating products and drip dried. After they were completely dry the bottles were placed in a climatic chamber for 14 days at 40°C and 85 rH. The high humidity had no recognizable effect on the maskings.

### 5. Persistence after condensation of water

Scuffed bottles were treated by dipping them into the above coating products and drip dried. After the bottles had completely dried they were cooled in a refrigerator for 2 days. Afterwards the bottles were placed on a white cloth and stored at ambient temperature to generate condensed water. After the bottles had dried again, the bottles were evaluated with regard to masking persistence.

It was observed, that the forming of condensed water had no impact on the masking agent and there were no dirt marks on the white cloth.

### 6. Persistence in an ice water bath

Scuffed bottles were treated by dipping them into the above application solutions and drip dried. After they had completely dried the bottles were placed in a ice water bath with approx. 0°C for 1 h. Afterwards the bottles were removed from the bath and dried. The bottles were evaluated with regard to the persistence of the masking agents. The water bath was evaluated with regard to residues/changes to the water bath.

It was observed, that there was no impact on the masking agents by placing the bottles in an ice water bath. There were no residues/changes found in the water bath.

### 7. Compatibility with conveyor

A short track test with a chain lubricant (P3-lubodrive TK, commercially available from Ecolab Inc.) at a concentration of 0,12% was carried out. After about 30 min. above coating product 1 was applied to the chains by spraying (150 mL/3 minutes). The relative friction was measured during the whole test.

Although the friction slightly increased during application, it decreased again after the application and there was observed no build-up of residues during the test.

## Claims

1. Method for masking scuffings on glass or plastic surfaces comprising applying a coating product onto the surface of said substrate wherein the coating product comprises 70 to 100 wt-% of one or more polyether compounds selected from polyethylene glycol and polypropylene glycol 0 to 20 wt-% glycerine, 0 to 10 wt-% water, and 0 to 1 wt-% fatty alcohol alkoxylate based on the coating product.

2. Method according to claims 1 **characterized in that** the polyether is contained in an amount of from 75 to 99,9 wt.%, more preferred 90 to 99 wt.% based on the coating product.

3. Method according to claims 1 to 2 **characterized in that** the coating product additionally contains one or more compounds selected from the group comprising surfactants, especially non-ionic surfactants, emulsifiers, preservatives, thickening agents and one or more solvents other than water.

4. Method according to claim 3 **characterized in that** the water content is 1 to 10 wt.% based on the coating product.

5. Method according to claim 1 **characterized in that** the glass or plastic surface has a flat or warped finish.

6. Method according to claim 5 **characterized in that** the warped finish is part of a hollow body, particularly used in multi trip and especially in the food and beverage industry

7. Method according to claim 6 **characterized in that** the hollow body is a container, especially a bottle.

8. Method according to claims 1 to 7 **characterized in that** the coating product which is essentially free of water and/or solvents is diluted with water and/or one or more solvents before appliance such that the use solution to be applied contains 1 to 10 wt.% water or solvent(s) or mixtures thereof based on the use solution.

9. Method according to claims 1 to 8 **characterized in that** the coating is applied before or after filling the bottles.

10. Method according to claims 1 to 9 **characterized in that** the coating is applied before or after labeling the bottles.

11. Method according to claims 1 to 10 **characterized in that** the surface is only partially coated.

## Patentansprüche

1. Verfahren zum Abdecken von Verschleißspuren auf Glas- oder Kunststoffoberflächen, umfassend Aufbringen eines Beschichtungsprodukts auf die Oberfläche dieses Substrats, wobei das Beschichtungsprodukt 70 bis 100 Gew.-% einer oder mehrerer Polyetherverbindungen, ausgewählt aus Polyethylenglykol und Polypropylenglykol, 0 bis 20 Gew.-% Glycerin, 0 bis 10 Gew.-% Wasser und 0 bis 1 Gew.-% Fettalkoholalkoxylat, bezogen auf das Beschichtungsprodukt, enthält.

2. Verfahren gemäß Anspruch 1, **dadurch gekennzeichnet, dass** der Polyether in einer Menge von 75 bis 99,9 Gew.-%, bevorzugter 90 bis 99 Gew.-%, bezogen auf das Beschichtungsprodukt, enthalten ist.

3. Verfahren gemäß Ansprüchen 1 bis 2, **dadurch gekennzeichnet, dass** das Beschichtungsprodukt zusätzlich eine oder mehrere Verbindung, ausgewählt aus der Gruppe umfassend oberflächenaktive Mittel, insbesondere nichtionische oberflächenaktive Mittel, Emulgatoren, Konservierungsstoffe, Verdickungsmittel und ein oder mehrere von Wasser verschiedene Lösungsmittel, enthält.

4. Verfahren gemäß Anspruch 3, **dadurch gekennzeichnet, dass** der Wasser gehalt 1 bis 10 Gew.-%, bezogen auf das Beschichtungsprodukt, beträgt.

5. Verfahren gemäß Anspruch 1, **dadurch gekennzeichnet, dass** die Glas- oder Kunststoffoberfläche in planer oder gewölbter Ausführung vorliegt.

6. Verfahren gemäß Anspruch 5, **dadurch gekennzeichnet, dass** die gewölbte Ausführung Teil eines Hohlkörpers ist, der insbesondere im Mehrwegverfahren und speziell in der Nahrungs- und Getränkeindustrie verwendet wird.

7. Verfahren gemäß Anspruch 6, **dadurch gekennzeichnet, dass** der Hohlkörper ein Behälter und insbesondere eine Flasche ist.

8. Verfahren gemäß Ansprüchen 1 bis 7, **dadurch gekennzeichnet, dass** das Beschichtungsprodukt, das im Wesentlichen frei von Wasser und/oder Lösungsmitteln ist, mit Wasser und/oder einem oder mehreren Lösungsmitteln vor Anwendung verdünnt wird, sodass die aufzutragende Anwendungslösung 1 bis 10 Gew.-% Wasser oder Lösungsmittel oder Mischungen derselben, bezogen auf die Anwendungslösung, enthält.

9. Verfahren gemäß Ansprüchen 1 bis 8, **dadurch gekennzeichnet, dass** die Beschichtung vor oder nach Füllen der Flaschen aufgebracht wird.

10. Verfahren gemäß Ansprüchen 1 bis 9, **dadurch gekennzeichnet, dass** die Beschichtung vor oder nach Etikettierung der Flaschen aufgebracht wird.

11. Verfahren gemäß Ansprüchen 1 bis 10, **dadurch gekennzeichnet, dass** die Oberfläche nur teilweise beschichtet wird.

## Revendications

1. Procédé destiné à masquer les éraflures sur des surfaces en verre ou en plastique, comprenant l'application d'un produit de revêtement sur la surface dudit substrat, dans lequel le produit de revêtement comprend 70 à 100 % en poids d'un ou plusieurs composés de polyéther choisis parmi le polyéthylène glycol et le polypropylène glycol, avec 0 à 20 % en poids de glycérine, 0 à 10 % en poids d'eau, et 0 à 1 % en poids d'alcoxylate d'alcool gras, sur la base du produit de revêtement.

2. Procédé selon la revendication 1, **caractérisé en ce que** le polyéther est contenu dans une quantité de 75 à 99,9 % en poids, de manière préférée de 90 à 99 % en poids, sur la base du produit de revêtement.

3. Procédé selon les revendications 1 à 2, **caractérisé en ce que** le produit de revêtement contient en outre un ou plusieurs composés choisis dans le groupe comprenant des tensio-actifs, en particulier des tensio-actifs non-ioniques, des émulsionnants, des conservateurs, des agents épaississants et un ou plusieurs solvants, autres que l'eau.

4. Procédé selon la revendication 3, **caractérisé en ce que** la teneur en eau est de 1 à 10 % en poids, sur la base du produit de revêtement.

5. Procédé selon la revendication 1, **caractérisé en ce que** la surface en verre ou en plastique a une finition plane ou déformée.

6. Procédé selon la revendication 5, **caractérisé en ce que** la finition déformée fait partie d'un corps creux, particulièrement utilisé dans les dispositifs réutilisables, et en particulier dans les industries alimentaires et des boissons.

7. Procédé selon la revendication 6, **caractérisé en ce que** le corps creux est un récipient, en particulier une bouteille.

8. Procédé selon les revendications 1 à 7, **caractérisé en ce que** le produit de revêtement, qui est essentiellement dénué d'eau et/ou de solvants, est dilué avec de l'eau et/ou un ou plusieurs solvants avant application, de sorte que la solution d'utilisation à appliquer contienne 1 à 10 % en poids d'eau ou de solvant(s) ou des mélanges correspondants, sur la base de la solution d'utilisation.

9. Procédé selon les revendications 1 à 8, **caractérisé en ce que** le revêtement est appliqué avant ou après remplissage des bouteilles.

10. Procédé selon les revendications 1 à 9, **caractérisé en ce que** le revêtement est appliqué avant ou après étiquetage des bouteilles.

11. Procédé selon les revendications 1 à 10, **caractérisé en ce que** la surface est seulement partiellement revêtue.
